# FASCICULE DE BREVET EUROPEEN

(11) **EP 3 835 181 B1**
(45) Date de publication et mention de la délivrance du brevet: **30.09.2026**
(21) Numéro de dépôt: 20211425.2
(22) Date de dépôt: 03.12.2020
(51) Int. Cl.: B62D 65/12, B60B 30/00, B60B 31/00, B60B 31/02, B60B 1/00

(54) **SYSTEME D'ACHEMINEMENT D'AU MOINS UNE ROUE A RAYONS AU TRAVERS D'UNE MACHINE DE TENSIONNEMENT**
SYSTEM ZUM VORSCHUB MINDESTENS EINES SPEICHENRADS DURCH EINE SPANNMASCHINE
SYSTEM FOR TRANSPORTING AT LEAST ONE SPOKE WHEEL THROUGH A TENSIONING MACHINE

(30) Priorité: 12.12.2019 FR 1914299
(43) Date de publication de la demande: 16.06.2021
(73) Titulaire: BIKEBOTIX, 74730 Villaz (FR)
(72) Inventeur: GAILLARD, Emmanuel, 74370 VILLAZ (FR)
(74) Mandataire: Ipsilon

(56) Documents cités:
- EP-A1- 2 161 142
- EP-A1- 2 521 655
- EP-A2- 0 901 911
- EP-B1- 2 521 655
- WO-A1-00/16996
- AT-B- 318 359
- DE-A1- 2 628 361
- US-A- 3 758 931

## Description

### DOMAINE TECHNIQUE

L'invention se rattache au secteur technique de la fabrication des roues destinées à équiper des véhicules de locomotion à deux roues, tels que des vélos ou des motocyclettes.

Plus précisément, l'invention concerne un système d'acheminement, c'est-à-dire de chargement/approvisionnement et d'évacuation de roues à rayons, vers et depuis une machine de tensionnement des rayons, ou vers et depuis toute machine utilisée dans un procédé de fabrication d'une roue à rayons.

### ART ANTÉRIEUR

Il est connu de l'art antérieur le document EP 2 521 655, qui divulgue une machine de tensionnement automatique pour roues à rayons. Cette machine comprend un système de chargement d'une roue comportant une goulotte inclinée en direction de la machine, et des rails de guidage.

En pratique, les roues sont acheminées vers la machine de tensionnement par l'intermédiaire de la goulotte sur laquelle les roues sont posées et roulent vers la machine du fait de la gravité.

Il en est de même pour le déchargement ou l'évacuation de la roue qui s'effectue de la même manière, notamment en roulant sur une goulotte, guidée par des rails.

Ce système d'acheminement des roues présente limite la productivité, le temps de chargement et de déchargement des roues peut être largement diminué.

Il est connu les documents EP0901911 et DE2628361 qui décrivent un système d'acheminement d'au moins une roue à rayons au travers d'une machine de travail. Il est connu le document AT318359B qui décrive un système d'acheminement d'au moins une roue à rayons au travers d'une machine de travail.

Cependant, dans ces documents, les systèmes d'acheminement de la roue ne sont pas optimisés en termes de cadence de production de roues à rayons.

### EXPOSE DE L'INVENTION

L'un des buts de l'invention est donc de remédier aux problèmes précités en fournissant un système d'acheminement d'une roue au travers d'une machine de travail, par exemple une machine de tensionnement, qui soit optimisé, simple, et qui permette d'augmenter la cadence de production de roues à rayons.

À cet effet, il a été mis au point un système d'acheminement d'au moins une roue à rayons au travers d'une machine de travail, par exemple de tensionnement des rayons, remarquable en ce qu'il comprend des moyens de maintien de la roue déplaçables automatiquement en direction et au travers de la machine de tensionnement.

Par automatiquement on entend que la roue est déplacée de manière active par des éléments pilotés, ou motorisés. De cette manière, le temps d'acheminement d'une roue dans la zone prévue pour le tensionnement est considérablement réduit.

En effet, l'acheminement d'une roue selon l'art antérieur est passif et s'effectue par l'action conjointe d'une goulotte inclinée et de la gravité dure environ cinq secondes, tandis que l'acheminement d'une roue selon l'invention est actif et s'effectue par l'action de moyens de maintien, eux même déplaçables automatiquement, peut être effectué très rapidement, notamment dans une durée de l'ordre de la seconde. Les cadences de fabrication des roues à rayons, incluant l'étape de tensionnement, sont améliorées. Dans l'art antérieur, la goulotte est fixe et c'est la roue elle-même qui se déplace et roule, ce qui allonge fortement les durées et diminue donc les cadences de production.

La présente invention trouve une application avantageuse pour acheminer successivement une pluralité de roues, chaque roue étant supportée par des moyens de maintien déplaçables à l'intérieur de la machine de tensionnement.

Les moyens de maintien soutiennent la roue verticalement afin de permettre de réaliser un tensionnement de la roue dans des conditions optimales, compte tenu de l'appareillage généralement utilisé.

Les moyens de maintien sont déplaçables par le défilement d'au moins un convoyeur, tel qu'une bande convoyeuse.

Cette solution permet un acheminement régulier et simplifié des roues au travers de la machine de tensionnement, sans arrêt, ni temps d'attente. Le positionnement de la roue à l'intérieur de la machine se fait de manière précise et rapide. Par ailleurs, lorsque le système selon l'invention évacue une roue de la machine de tensionnement, une autre roue est acheminée simultanément à l'intérieur de la machine.

Les moyens de maintien se présentent sous la forme d'au moins deux cales, par exemple sous la forme de barres transversales, agencées de part et d'autre de la roue et disposées orthogonalement par rapport au plan de la roue.

Selon une forme de réalisation particulière, chaque extrémité de chaque cale est solidaire d'un sabot, lui-même solidaire d'un convoyeur, tel qu'une bande convoyeuse.

Le sabot est ici présenté à titre d'exemple, et est nullement limitatif. D'autres moyens de soutien des cales peuvent être envisagés.

Selon encore une forme de réalisation, le système comprend deux rails de guidage positionnés au niveau de l'extrémité supérieure de la roue et entre lesquels la roue est destinée à être acheminée, afin d'éviter que la roue tombe lors de son acheminement. Préférentiellement, les moyens de maintien comprennent des moyens de serrage de la section de la roue pour la maintenir en position verticale.

De cette façon, la mise en place des cales à l'intérieur des sabots est facilitée, le montage des cales est rendu aisé et ces dernières sont facilement remplaçables.

Selon un mode de réalisation préférentiel, les cales présentent des propriétés antidérapantes pour améliorer la stabilité des roues.

De préférence, les cales comprennent un dispositif de guidage latéral de la roue.

Selon encore un autre mode de réalisation, les cales peuvent être montées rotatives autour de leur axe longitudinal pour pouvoir entrainer la roue en rotation lors de l'opération de tensionnement.

### DESCRIPTION DES FIGURES

[Fig. 1] la figure 1 est une représentation schématique illustrant un système d'acheminement d'une roue selon l'invention, où la roue est en cours d'acheminement jusqu'à une zone de tensionnement.
[Fig. 2] la figure 2 est un agrandissement d'une zone de la figure 1, dans laquelle les moyens de maintien soutiennent la roue dans la zone de tensionnement.
[Fig. 3] la figure 3 est un agrandissement d'une zone de la figure 1, dans laquelle les moyens de guidage stabilisent verticalement la roue dans la zone de tensionnement, et illustrant l'acheminement d'une roue simultanément à l'évacuation d'une autre roue.

### DESCRIPTION DÉTAILLÉE DE L'INVENTION

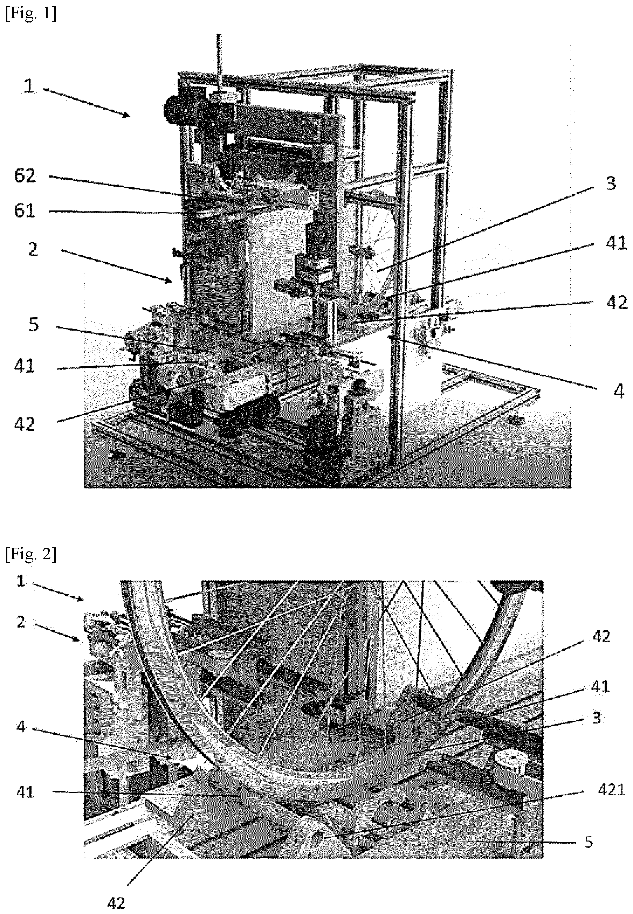

En référence à la figure 1, l'invention concerne un système d'acheminement (1) d'une roue (3) à rayons au travers d'une machine de travail dans un procédé de fabrication d'une roue à rayons, et par exemple au travers d'une machine de tensionnement (2) des rayons, ou de serrage et desserrage des écrous des rayons. Par acheminement, on entend l'approvisionnement d'une roue dans la machine, mais également l'évacuation de ladite roue de la machine après l'opération effectuée par la machine.

Dans la suite de la description il sera fait référence, et sans que cela ne soit limitatif, à l'acheminement d'une roue au travers d'une machine de tensionnement (2). La machine de tensionnement (2) est ici destinée à tendre et serrer les rayons des roues. Celle-ci comprend toute l'installation nécessaire et bien connue de l'homme du métier. La machine de tensionnement est bien connue et ne sera pas décrite en détail.

Le système d'acheminement (1) selon l'invention comprend des moyens de maintien (4) de la roue (3)en position verticale. Ces moyens de maintien (4) se présentent par exemple sous la forme de cales (41) transversales. Ces cales (41) transversales sont préférentiellement sous la forme de barres, par exemple à section cylindriques, insérées et fixées dans des sabots (42).

Les cales (41) présentent un axe longitudinal perpendiculaire au plan des roues (3), assurant ainsi un maintien simplifié et stable de la roue en étant disposées de part et d'autre de ladite roue (3). Chaque roue (3) est alors posée sur une paire de cales (41) et maintenue dans cette position lors de l'acheminement. La distance entre les cales (41) d'une paire de cales est de préférence réglable en fonction du diamètre des roues pour assurer un bon maintien durant le déplacement.

Toujours selon la même figure, les moyens de maintien (4) sont montés déplaçables, au moyen d'au moins un convoyeur, tels que deux bandes convoyeuses (5) en direction et au travers de la machine (2) de tensionnement.

Ces convoyeurs (5) défilent notamment au travers de la machine (2) pour acheminer et évacuer les différentes roues (3).

Préférentiellement, les convoyeurs (5) ne se limitent pas uniquement à la machine de tensionnement (2), mais relient toute l'installation destinée à traiter des roues (3) à rayons.

Comme précisé plus haut, et en référence aux figures 1 et 2, les cales (41) sont enchâssées et soutenues par des sabots (42), lesdits sabots (42) étant eux même chacun solidaire d'un convoyeur tel qu'une bande convoyeuse (5) de manière à laisser un espace entre lesdits convoyeurs (5) pour que l'appareillage nécessaire au tensionnement des rayons puisse être positionné entre elles. Par exemple, des moyens de serrage ou de mise en rotation de la roue (3) peuvent être positionnés entre les deux convoyeurs (5).

Les cales (41), dans un but de maintien simplifié, sont de forme tubulaire et présentant un axe longitudinal orthogonal au plan de la roue (3). Les sabots (42) présentent quant à eux un orifice (421) destiné à accueillir l'extrémité des cales (41).

Afin d'acheminer une pluralité de roues (3), une pluralité de paires de cales (41), est positionnée successivement et à intervalles réguliers le long de la ou des convoyeur (5).

De telle façon que, lorsqu'une roue (3) est en position de travail, une autre paire de cales (41) est également positionnée pour accueillir une autre roue (3) en provenance du poste amont. L'accueil sur de la roue amont, peut donc se faire en temps masqué.

Le déplacement est donc automatique, les roues (3) restent fixes et ce sont les paires de cales (41) qui sont déplacées, notamment par les convoyeur (5). Le déplacement peut être effectué rapidement, c'est-à-dire par exemple à une vitesse de 1m/s. En pratique, cela permet d'acheminer et d'évacuer simultanément une roue (3) en une durée inférieure à 2 secondes, par exemple en 1 seconde.

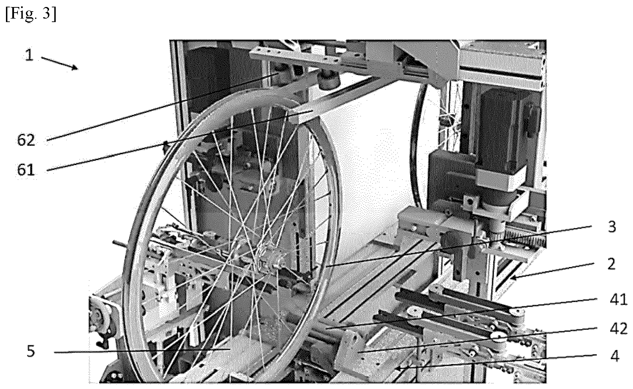

Le système comprend avantageusement des moyens de guidage de la roue (3) qui peuvent être de tout type approprié, permettant de maintenir la roue (3) acheminée en position verticale et d'éviter toute chute. A titre d'exemple, et en référence à la figure 3, les moyens de guidage se présentent sous la forme de rails (61). Les rails (61) sont, par exemple, équipés de galets (62), permettant d'assister ou d'entrainer la rotation de la roue (3) lors du tensionnage des rayons.

## Revendications

1. Système d'acheminement (1) d'au moins une roue (3) à rayons au travers d'une machine de travail, telle qu'une machine de tensionnement (2) des rayons, le système comprend des moyens de maintien (4) de la roue (3) qui sont déplaçables automatiquement, ***caractérisé* en ce que** les moyens de maintien (4) de la roue (3) soutiennent la roue (3) verticalement et sont déplaçables en direction et au travers de la machine de travail par le défilement d'au moins un convoyeur (5) ; et **en ce que** les moyens de maintien (4) se présentent sous la forme d'au moins deux cales (41), agencées de part et d'autre de la roue (3) et disposées orthogonalement par rapport au plan de la roue (3).

2. Système d'acheminement (1) selon la revendication 1, ***caractérisé* en ce que** chaque extrémité de chaque cale (41) est solidaire d'un sabot (42), ledit sabot (42) étant solidaire d'un convoyeur (5).

3. Système d'acheminement (1) selon la revendication 1, ***caractérisé* en ce qu'**il comprend deux rails (61) de guidage positionnés au niveau de l'extrémité supérieure de la roue (3) et entre lesquels la roue est destinée à être acheminée.

4. Système d'acheminement (1) selon la revendication 1, ***caractérisé* en ce que** les moyens de maintien (4) comprennent des moyens de serrage de la section de la roue (3).

5. Système d'acheminement (1) selon la revendication 1, ***caractérisé* en ce que** les cales (41) se présentent sous la forme de barres transversales.

6. Système d'acheminement (1) selon la revendication 1, ***caractérisé* en ce que** la distance entre les deux cales (41) est réglable en fonction du diamètre des roues.

7. Système d'acheminement (1) selon la revendication 1, ***caractérisé* en ce que** les cales (41) comprennent un dispositif de guidage latéral de la roue.

## Patentansprüche

1. Zuführsystem (1) für mindestens ein Speichenrad (3) durch eine Bearbeitungsmaschine, wie etwa eine Speichenspannmaschine (2), wobei das System Haltemittel (4) für das Rad (3) umfasst, die automatisch bewegbar sind, **dadurch gekennzeichnet, dass** die Haltemittel (4) für das Rad (3) das Rad (3) vertikal abstützen und durch den Umlauf mindestens eines Förderers (5) in Richtung der Bearbeitungsmaschine und durch diese hindurch bewegbar sind; und dass die Haltemittel (4) in Form von mindestens zwei Auflagen (41) ausgebildet sind, die beiderseits des Rades (3) angeordnet und orthogonal zur Ebene des Rades (3) ausgerichtet sind.

2. Zuführsystem (1) nach Anspruch 1, **dadurch gekennzeichnet, dass** jedes Ende jeder Auflage (41) mit einem Schuh (42) verbunden ist, wobei der Schuh (42) mit einem Förderer (5) verbunden ist.

3. Zuführsystem (1) nach Anspruch 1, **dadurch gekennzeichnet, dass** es zwei Führungsschienen (61) umfasst, die im Bereich des oberen Endes des Rades (3) angeordnet sind und zwischen denen das Rad zugeführt werden soll.

4. Zuführsystem (1) nach Anspruch 1, **dadurch gekennzeichnet, dass** die Haltemittel (4) Klemmmittel zum Klemmen des Querschnitts des Rades (3) umfassen.

5. Zuführsystem (1) nach Anspruch 1, **dadurch gekennzeichnet, dass** die Auflagen (41) in Form von Querstreben ausgebildet sind.

6. Zuführsystem (1) nach Anspruch 1, **dadurch gekennzeichnet, dass** der Abstand zwischen den beiden Auflagen (41) in Abhängigkeit vom Durchmesser der Räder einstellbar ist.

7. Zuführsystem (1) nach Anspruch 1, **dadurch gekennzeichnet, dass** die Auflagen (41) eine seitliche Führungsvorrichtung für das Rad umfassen.

## Claims

1. System (1) for conveying at least one spoked wheel (3) through a working machine, such as a spoke tensioning machine (2), the system comprising holding means (4) for the wheel (3) which are automatically movable, **characterized in that** the holding means (4) for the wheel (3) support the wheel (3) vertically and are movable towards and through the working machine by movement of at least one conveyor (5); and **in that** the holding means (4) are in the form of at least two supports (41), arranged on either side of the wheel (3) and disposed orthogonally to the plane of the wheel (3).

2. Conveying system (1) according to claim 1, **characterized in that** each end of each support (41) is secured to a shoe (42), said shoe (42) being secured to a conveyor (5).

3. Conveying system (1) according to claim 1, **characterized in that** it comprises two guide rails (61) positioned at the upper end of the wheel (3) and between which the wheel is intended to be conveyed.

4. Conveying system (1) according to claim 1, **characterized in that** the holding means (4) comprise means for clamping the section of the wheel (3).

5. Conveying system (1) according to claim 1, **characterized in that** the supports (41) are in the form of transverse bars.

6. Conveying system (1) according to claim 1, **characterized in that** the distance between the two supports (41) is adjustable according to the diameter of the wheels.

7. Conveying system (1) according to claim 1, **characterized in that** the supports (41) comprise a lateral wheel-guiding device.
